# EUROPEAN PATENT APPLICATION

(11) **EP 2 439 936 A2**
(43) Date of publication of application: **11.04.2012**
(21) Application number: 11180149.4
(22) Date of filing: 06.09.2011
(51) Int. Cl.: H04N 5/445

(54) **Method and apparatus for displaying using image code**

(30) Priority: 07.10.2010 KR 20100097615
(71) Applicant: SAMSUNG ELECTRONICS CO., LTD., Suwon-si, Gyeonggi-do (KR)
(72) Inventor: Choi, Seung-hyuk, Gyeonggi-do (KR); Song, In-hyuk, Gyeonggi-do (KR)
(74) Representative: Bruce, Alexander Richard Henry

(57) **Abstract**

A display method using an image code is provided, which can provide various types of information related to a moving image content. The display method includes perceiving the image code inserted in image forms in moving image information of a moving image content, analyzing the information included in the image code related to the moving image content, by decoding the image code, and displaying the information contained in the image code.

## Description

The present invention relates to displaying, and more particularly, to displaying information on a screen using an image code.

With the rapidly expanding use of computers, many technologies have been developed. Among these, Transport Control Protocol/Internet Protocol (TCP/IP)-based Internet has led to integration of various communication networks worldwide into the Internet. This has enabled Internet users to access and acquire abundant information via the Internet.

Even displays such as TVs are being developed to provide bidirectional services via the Internet.

However, although the displays can provide information such as electronic programming guide (EPG) or subtitles, the displays are still limited so as to freely exchange data regarding various types of information in association with the web on the Internet at desired time points.

One or more exemplary embodiments of the present inventive concept overcome the above disadvantages and/or other disadvantages not described above. Also, the present inventive concept is not required to overcome the disadvantages described above, and an exemplary embodiment of the present inventive concept may not overcome any of the problems described above.

According to an aspect of an exemplary embodiment, a technical objective is to provide a method and an apparatus for providing information related to moving image content using an image code.

A display method using an image code may include perceiving the image code inserted in image forms in moving image information of a moving image content, analyzing the information included in the image code related to the moving image content, by decoding the image code, and displaying the information contained in the image code.

The decoding comprises trans-coding the moving image content including the image code in another format.

The display method may additionally include uploading the trans-coded moving image content on the internet.

The information contained in the image code may include at least one of: surveys related to the moving image content, inquiry as to whether or not to install an application related to the moving image content, inquiry as to whether or not to execute an application related to the moving image content, or inquiry as to whether or not to move to an event site related to the moving image content.

The image code may include at least one of a one-dimensional barcode, two-dimensional barcode and three-dimensional barcode.

In one exemplary embodiment, the perceiving the image code may include capturing the screen of the moving image content including the image code according to a user's command to capture the screen of the moving image content, and perceiving the image code according to a user's command to perceive the image code from among the captured screen.

In another exemplary embodiment, the perceiving the image code may include automatically scanning the moving image content and perceiving the image code inserted in the moving image content in real-time basis, and displaying a decoding-inducing on-screen display (OSD) to select the perceived image code in real-time basis.

The information contained in the image code may include at least one of: OSD information related to the moving image content to be displayed on the OSD, and jumping information to move the screen to a site corresponding to the information selected by the user.

In one exemplary embodiment, the displaying the information contained in the image code may include displaying the OSD information on the OSD.

The display method may additionally include moving the screen to a site corresponding to the selected information according to the jumping information.

In one exemplary embodiment, the displaying the information contained in the image code may include displaying an execution menu regarding the information contained in the image code, and executing a function of the execution menu selected by a user.

The executing the function of the execution menu selected by the user may include executing the function of the execution menu selected by the user, using a web browser or an application manager according to a type of the information contained in the image code.

According to an aspect of an exemplary embodiment, a display apparatus using an image code may also be provided, which may include an image code perceiving unit which perceives the image code inserted in image forms in moving image information of a moving image content, an image code decoding unit which analyzes the information included in the image code by decoding the image code, and a display unit which displays the information contained in the image code.

The image code decoding unit trans-codes the moving image content including the image code in another format.

The display apparatus may additionally include an uploading unit which uploads the trans-coded moving image content on the internet.

The information contained in the image code may include at least one of: surveys related to the moving image content, inquiry as to whether or not to install an application related to the moving image content, inquiry as to whether or not to execute an application related to the moving image content, or inquiry as to whether or not to move to an event site related to the moving image content.

The image code may include at least one of a one-dimensional barcode, two-dimensional barcode and three-dimensional barcode.

The image code perceiving unit may include a screen capturing unit which captures the screen of the moving image content including the image code according to a user's command to capture the screen of the moving image content, and an image code perception executing unit which perceives the image code according to a user's command to perceive the image code from among the captured screen.

The image code perceiving unit may include an automatic image code perceiving unit which automatically scans the moving image content and perceives the image code inserted in the moving image content in real-time basis, and a decoding-inducing OSD display unit which displays a decoding-inducing OSD inducing to decode the image code perceived by the automatic image code perceiving unit.

The information contained in the image code may include at least one of: OSD information related to the moving image content to be displayed on the OSD, and jumping information to move the screen to a site corresponding to the information selected by the user.

The display unit displays the OSD information on the OSD.

According to an aspect of an exemplary embodiment, the display apparatus may additionally include a control unit which controls the display unit to move the screen to a site corresponding to the selected information according to the jumping information.

The display unit displays an execution menu regarding the information contained in the image code, and the display apparatus may additionally include a control unit which executes a function of the execution menu selected by a user.

The control unit executes the function of the execution menu selected by the user, using a web browser or an application manager according to a type of the information contained in the image code.

The above and/or other aspects will be more apparent by describing in detail exemplary embodiments with reference to the accompanying drawings, in which:
FIG. 1 is a schematic block diagram of a display device using image codes according to an exemplary embodiment;
FIG. 2 is a schematic block diagram illustrating the image code perceiving unit of FIG. 1, according to an exemplary embodiment;
FIG. 3 illustrates one example in which the image code perceived at the image code perceiving unit of FIG. 2 is inserted in the moving image content;
FIG. 4 is a schematic block diagram illustrating the image code perceiving unit of FIG. 1, according to another exemplary embodiment;
FIG. 5 illustrates an example in which the image code perceived at the image code perceiving unit of FIG. 3 is inserted into the moving image content;
FIG. 6 illustrates an example of an image code used in a display apparatus using image code, according to an exemplary embodiment;
FIG. 7 illustrates various examples of the information contained in another image code according to an exemplary embodiment;
FIG. 8 is a flowchart provided to explain a display method using an image code according to an exemplary embodiment; and
FIG. 9 is a flowchart illustrating a display method using an image code according to another exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the aspects of the exemplary embodiments with unnecessary detail.

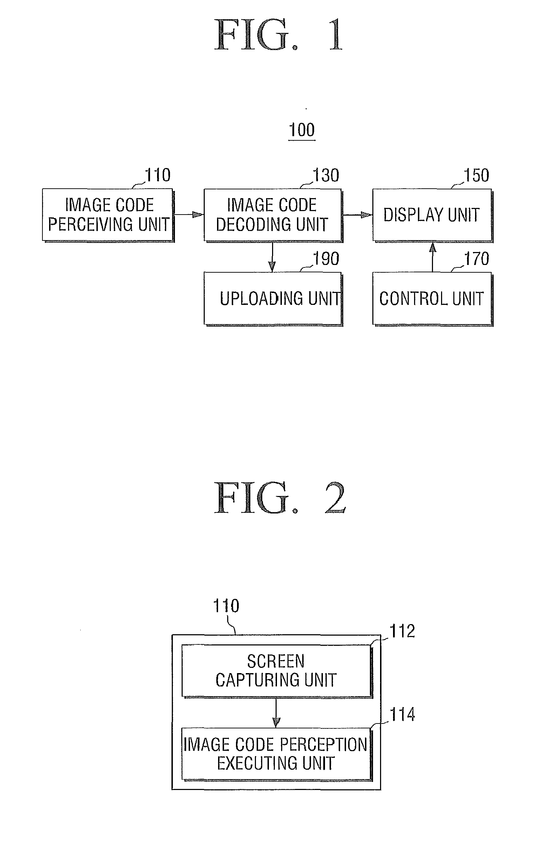

FIG. 1 is a schematic block diagram of a display device using image codes according to an exemplary embodiment. Referring to FIG. 1, the display device 100 using the image code may include an image code perceiving unit 110, an image code decoding unit 130, a display unit 150, a control unit 170 and an uploading unit 190.

The image code perceiving unit 110 perceives image code inserted in image forms in the moving image information of the moving image content.

In other words, the image code perceiving unit 110 according to an exemplary embodiment perceives the image code as the image forms in which the image code is inserted into the moving image information.

In one exemplary embodiment, the image code may include at least one of one-dimensional barcode, two-dimensional barcode and three-dimensional barcode.

To explain an exemplary embodiment, it is assumed that a quick response (QR) code, which is one type of two-dimensional barcode, is inserted into the moving image content. However, the exemplary embodiment is not limited to the specific examples, and various forms of image codes may be inserted into the moving image content.

In one exemplary embodiment, and with reference to FIG. 2, the image code perceiving unit 110 may include a screen capturing unit 112 and an image code perception executing unit 114.

The screen capturing unit 112 captures the screen of the moving image content including the image code, in accordance with a user's screen capture command directing to capture the screen of the moving image content.

That is, when a user perceives the image code in image form included in the moving image content and inputs a screen capture command, thereby directing to capture the screen including the moving image content and the image code inserted therein, the screen capturing unit 112 captures the screen of the moving image content in which the image code is inserted.

The image code perception executing unit 114 perceives the image code according to a user's image code perception command which directs to perceive the image code from among the screen captured by the screen capturing unit 112.

By way of example, the user may input a command to perceive the image code, thereby directing the image code perception executing unit 114 to perceive a portion of the captured screen at which the image code is inserted, and upon receiving the user's command to perceive the image code. Therefore, the image code perception executing unit 114 perceives the image code included in the captured screen according to the user's command to perceive the image code.

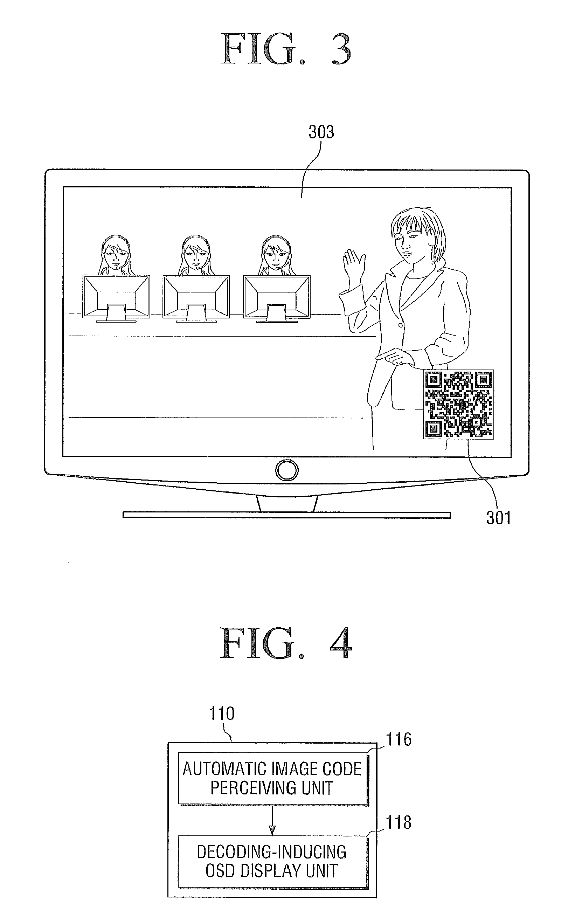

FIG. 3 illustrates one example in which the image code perceived at the image code perceiving unit 110 of FIG. 2 is inserted in the moving image content.

Referring to FIG. 3, the image code 301 is inserted in the moving image content 303. In this example, the image code perception executing unit 114 captures the screen of the moving image content 303 including the image code 301 according to the user's command to capture the screen. The user inputs a command to perceive the image code 301 by selecting the image code 301 included in the captured screen, so that the image code perception executing unit 114 perceives the image code 301.

Accordingly, the display apparatus using image codes according to an exemplary embodiment is capable of providing various types of information contained in the moving image content, according to a user who perceives the moving image content including the image code inserted therein and inputs a command to perceive the image code and thus perceive the image code which includes information about the corresponding moving image content.

Referring to FIG. 4, in another exemplary embodiment, the image code perceiving unit 110 may include an automatic image code perceiving unit 116 and a decoding-inducing OSD display unit 118.

The automatic image code perceiving unit 116 automatically scans the moving image content and perceives the image code 301 inserted in the moving image content 303 in a real-time basis.

In other words, while the image code perceiving unit 110 of FIG. 2 corresponds to an example where the user perceives the image code inserted in the moving image content, the image code perceiving unit 110 of FIG. 4 corresponds to an example where the image code inserted in the moving image content is automatically perceived by the image code perceiving unit 110 even when the user does not notice the image code 301 inserted in the moving image content 303.

Accordingly, the automatic image code perceiving unit 116 perceives the image code inserted in the moving image content 303, without requiring the user to view the screen and perceive the image code separately.

The decoding-inducing OSD display unit 118 displays a decoding-inducing OSD to select the image code perceived in a real-time basis by the automatic image code perceiving unit 116.

By way of example, the decoding-inducing OSD display unit 118 may display a decoding-inducing OSD according to which the user is invited to select the image code automatically perceived at the automatic image code perceiving unit 116.

Accordingly, the user may select the decoding-inducing OSD displayed by the decoding-inducing OSD display unit 118, if he wishes to receive information contained in the image code.

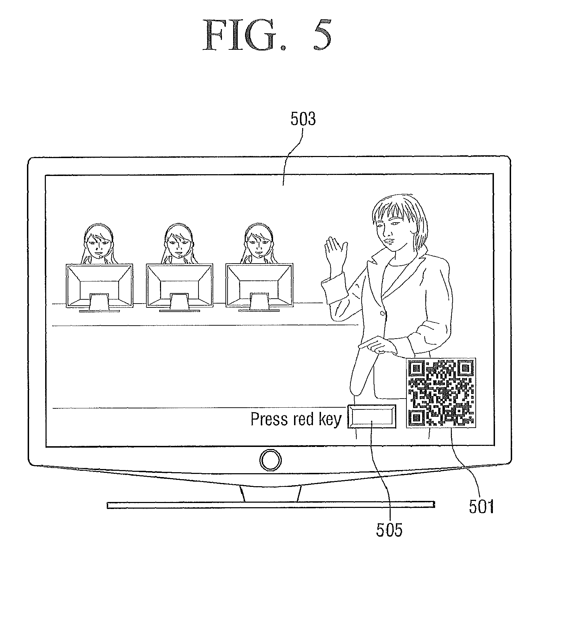

FIG. 5 illustrates an example in which the image code 501 perceived at the image code perceiving unit 110 of FIG. 4 is inserted into the moving image content 503.

Referring to FIG. 5, the image code 501 is inserted in the moving image content 503. Additionally, the decoding-inducing OSD 505 to induce decoding of the image code, which is perceived in real-time, is displayed.

The automatic image code perceiving unit 116 automatically perceives the image code 501 inserted in the moving image content 503, and the user may receive the information contained in the image code 501 inserted in the moving image content 503 by selecting the decoding-inducing OSD 505 displayed by the decoding-inducing OSD display unit 118.

Accordingly, in one exemplary embodiment, the display apparatus using the image code is capable of automatically perceiving an image code 501 inserted in the moving image content 503 and providing a decoding-inducing OSD 505 to induce decoding of the perceived image code 501, so that the user receives desired information which is contained in the image code 501 inserted in the moving image content 503.

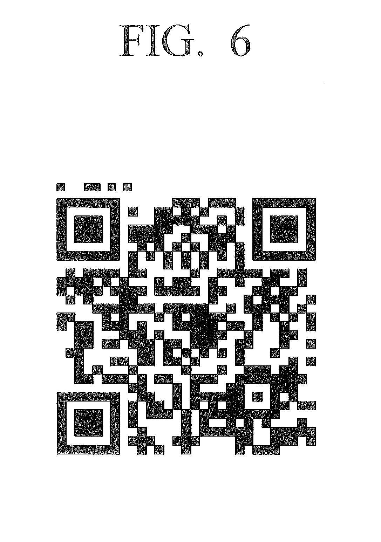

This is because, as illustrated in FIG. 6, the QR code as a two-dimensional barcode can store various types of information related to the moving image content. The QR code is a two-dimensional barcode in matrix pattern, representing information in patterns of black modules arranged in white background. The QR code overcomes the capacity limit of the conventional barcodes, and can store not only figures, but also text data, since the code contains longitudinal and transversal information in the two-dimensional barcode having extended forms and contents.

Referring again to FIG. 1, the image code decoding unit 130 decodes the image code contained in the moving image content and analyzes the information contained in the image code related to the moving image content.

In other words, the image code inserted in the moving image content includes information such as surveys related to the moving image contents, events, or the like, and the image code decoding unit 130 decodes the image code and analyzes this information related to the moving image content.

In one exemplary embodiment, the image code decoding unit 130 may trans-code the moving image content including the image code into another format.

In other words, the moving image content including the image code may be trans-coded to another format to enable encoding and uploading of a corresponding moving image in another format among users of the moving image UCC sites which have recently been increased.

The information contained in the image code may include at least one of: surveys related to the moving image content, inquiry as to whether or not to install application related to the moving image content, inquiry as to whether or not to execute an application related to the moving image content, or inquiry as to whether or not to move to an event site related to the moving image content.

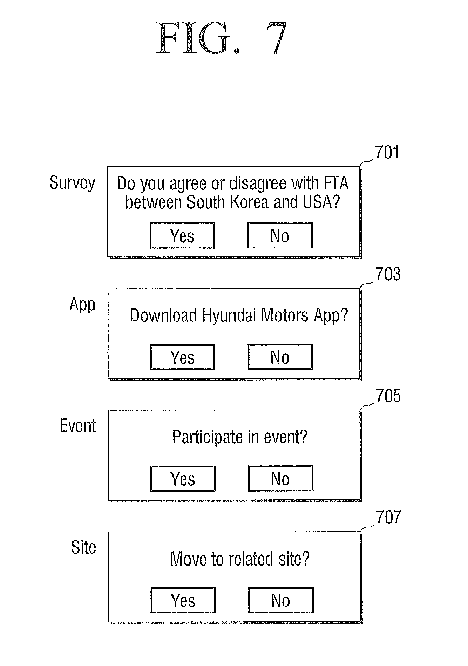

FIG. 7 illustrates various examples of the information contained in another image code according to an exemplary embodiment.

Referring to FIG. 7, the information contained in the image code may include: information 701 regarding surveys related to the moving image content; information 703 regarding download of a corresponding application related to the moving image content, information 705 regarding an event related to the moving image content, and information 707 regarding whether or not to move to a site related to the moving image content.

Referring back to FIG. 1, the display unit 150 displays the information contained in the image code.

In one exemplary embodiment, the display unit 150 may display an execution menu for the options included in the image code.

In one exemplary embodiment, the information contained in the image code may include at least one of: OSD information related to the moving image content to be displayed on the OSD, and jumping information to move the screen to a site corresponding to the information selected by the user.

In other words, the information contained in the image code may be divided into: various OSD information directly related to the moving image content; and jumping information which moves the screen to a corresponding site when OSD information is selected.

The display unit 150 may display the OSD information on the OSD.

The control unit 170 carries out the functions according to the selection by the user with respect to the execution menu.

In one exemplary embodiment, the control unit 170 may carry out the function with respect to the user's selection on the execution menu, using a web browser or an application manager in accordance with the type of information contained in the image code.

In other words, the control unit 170 may carry out the function according to the user's selection through the web browser, if the information contained in the image code is, for example, OSD information related with moving to a corresponding site or OSD information related to participating in an event, or carry out function according to the information selected by the user through the application manager, if the information contained in the image code is, for example, OSD information related to downloading of an application or OSD information related to installation of an application.

In one exemplary embodiment, the control unit 170 may control the display unit 150 to move the screen to a corresponding site according to the information selected by the jumping information.

In other words, the control unit 170 may control the display unit 150 to move the screen to a site corresponding to the OSD information as selected by the user.

The uploading unit 190 uploads the moving image content including the image code on to the internet.

In one exemplary embodiment, the uploading unit 190 may upload the moving image content including the image code in a trans-coded format on to the internet.

The above function is provided in consideration of increasing use of social network service (SNS) which is widely used on the web to strengthen ties among friends, colleagues, etc., and build on a new and wider human network.

Accordingly, the display device 100 using the image code according to an exemplary embodiment is capable of providing the users with various types of information stored in the image code inserted in image forms in the moving image content in various forms and without being restricted by time.

Hereinbelow, the display method using an image code according to an exemplary embodiment will be explained, while overlapping part with the above will be omitted for the sake of brevity.

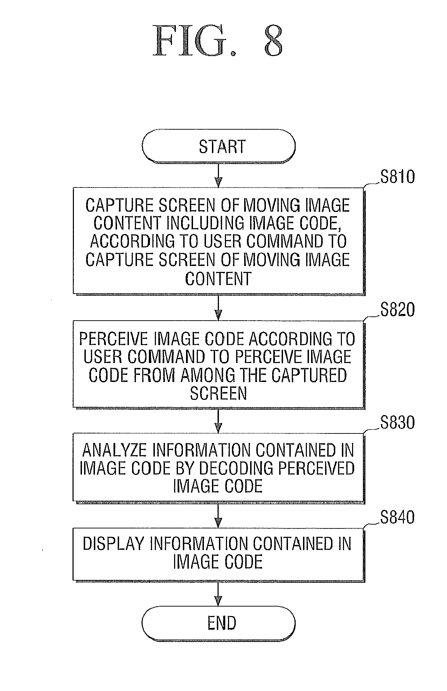

FIG. 8 is a flowchart provided to explain a display method using an image code according to an exemplary embodiment.

First, at S810, in accordance with a user's command to capture a screen of a moving image content, the screen of the moving image content including the image code is captured.

That is, when a user perceives the image code in image form included in the moving image content and inputs a screen capture command, thereby directing to capture the screen including the moving image content and the image code inserted therein, the screen of the moving image content in which the image code is inserted is captured.

In one exemplary embodiment, the image code may include at least one of one-dimensional barcode, two-dimensional barcode and three-dimensional barcode.

Next, at S820, the image code is perceived according to a user's command to perceive the image code in the captured screen.

By way of example, the user may input a command to perceive the image code, thereby directing the image code perceiving unit to perceive a portion of the captured screen at which the image code is inserted, and upon receiving the user's command to perceive the image code, the image code included in the captured screen is perceived.

At S830, the perceived image code is decoded and the information contained in the image code is analyzed.

In other words, the image code inserted in the moving image content includes information such as surveys related to the moving image contents, events, or the like, and this information related to the moving image content may be analyzed by decoding the image code.

In one exemplary embodiment, the decoding of the image may include trans-coding the moving image content including the image code into another format.

The displaying of the image code according to an exemplary embodiment may additionally include uploading the trans-coded moving image content on the internet.

The information contained in the image code may include at least one of: surveys related to the moving image content, inquiry as to whether or not to install application related to the moving image content, inquiry as to whether or not to execute an application related to the moving image content, or inquiry as to whether or not to move to an event site related to the moving image content.

At S840, the information contained in the image code is displayed.

The displaying (S840) of the information contained in the image code may include displaying an execution menu regarding the information contained in the image code; and executing a function of the execution menu selected by the user.

The executing of the function of the execution menu selected by the user may carry out the function with respect to the user's selection on the execution menu, using web browser or application manager in accordance with the type of information contained in the image code.

The information contained in the image code may include at least one of: OSD information related to the moving image content to be displayed on the OSD, and jumping information to move the screen to a site corresponding to the information selected by the user.

In other words, the information contained in the image code may be divided into: various OSD information directly related to the moving image content; and jumping information which moves the screen to a corresponding site when OSD information is selected.

The displaying (S840) of the information contained in the image code may display the OSD information on the OSD.

Further, the executing of the function with respect to the information contained in the image code and selected by the user may move the screen to a site corresponding to the selected information according to the jumping information.

In other words, it is possible to move the screen to a site corresponding to the OSD information selected by the user.

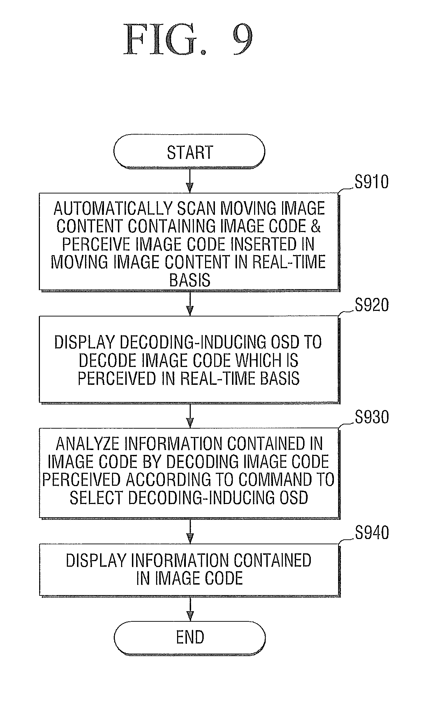

FIG. 9 is a flowchart illustrating a display method using an image code according to another exemplary embodiment.

In explaining the display method, the overlapping part with the exemplary embodiment explained above with reference to FIG. 8 will be omitted for the sake of brevity.

First, at S910, the moving image content including an image code is automatically scanned and the image code inserted in the moving image content is perceived in real-time basis.

In other words, the image content inserted in the moving image content is automatically perceived by the image code perceiving unit 110 even when the user does not notice the image code inserted in the moving image content.

Accordingly, the image code inserted in the moving image content is automatically perceived in real-time basis, without requiring the user to view the screen and perceive the image code separately.

In one exemplary embodiment, the image code may include at least one of a one-dimensional barcode, two-dimensional barcode and three-dimensional barcode.

At S920, a decoding-inducing OSD is displayed to decode the image code which is perceived in real-time basis.

At S930, the image code perceived according to a command to select decoding-inducing OSD is decoded and thus the information contained in the image code is analyzed.

The decoding of the image may include trans-coding the moving image content including the image code into another format.

The displaying of the image code may additionally include uploading the trans-coded moving image content on the internet.

The information contained in the image code may include at least one of: surveys related to the moving image content, inquiry as to whether or not to install application related to the moving image content, inquiry as to whether or not to execute an application related to the moving image content, or inquiry as to whether or not to move to an event site related to the moving image content.

Next, at S940, the information contained in the image code is displayed.

The displaying of the information contained in the image code may include: displaying an execution menu with respect to the information contained in the image code; and executing a function of the execution menu selected by the user.

The executing of the function of the execution menu selected by the user may carry out the function with respect to the user's selection on the execution menu, using web browser or application manager in accordance with the type of information contained in the image code.

The information contained in the image code may include at least one of: OSD information related to the moving image content to be displayed on the OSD, and jumping information to move the screen to a site corresponding to the information selected by the user.

The displaying (S940) of the information contained in the image code may include displaying the OSD information on the OSD.

Further, the executing of the function of the information selected by the user from among the information contained in the image code may move the screen to a site corresponding to the selected information according to the jumping information.

Accordingly, the display method using the image code according to an exemplary embodiment is capable of providing the users with various types of information stored in the image code inserted in image forms in the moving image content in various forms and without being restricted by time.

The display method using the image code may be implemented in program forms executable on a variety of computing means and recorded on computer-readable media. The computer-readable media may encompass program commands, data files, or data structure either individually or in combination. The program commands recorded on the media may be specifically designed and constructed for the exemplary embodiments, or may be generally known and used among those skilled in the field of computer software.

Examples of the computer-readable recording media encompass magnetic media such as hard disk, floppy disk, or magnetic tape, optical media such as CD-ROM, or DVD, magneto-optical media such as floptical disk, or hardware device such as flash memory which is designed specifically to store and execute the program commands. Meanwhile, the recording media may encompass an optical or metal wire, or a transmission medium such as waveguide which transmits a signal to designate a program command or data structure.

The example of the program command includes not only machine codes generated by the compiler, but also high-level language codes executable by the computer through the use of interpreter or the like. The hardware device may be implemented to operate as more than one software modules to carry out the operations according to the exemplary embodiments, and vice versa.

In various embodiments, various information related to the moving image content can be provided using the image code.

The foregoing exemplary embodiments and advantages are merely exemplary and are not to be construed as limiting the present inventive concept. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A display method using an image code, the display method comprising:
perceiving the image code inserted in image forms in moving image information of a moving image content;
analyzing information included in the image code related to the moving image content, by decoding the image code; and
displaying the information contained in the image code.

2. The display method of claim 1, wherein the decoding comprises trans-coding the moving image content including the image code in another format.

3. The display method of claim 2, further comprising uploading the trans-coded moving image content on the internet.

4. The display method of any of claims 1 to 3, wherein the information contained in the image code comprises at least one of: surveys related to the moving image content, inquiry as to whether or not to install an application related to the moving image content, inquiry as to whether or not to execute an application related to the moving image content, or inquiry as to whether or not to move to an event site related to the moving image content.

5. The display method of any of claims 1 to 4, wherein the image code comprises at least one of a one-dimensional barcode, two-dimensional barcode and three-dimensional barcode.

6. The display method of any of claims 1 to 5, wherein the perceiving the image code comprises:
capturing a screen of the moving image content including the image code according to a user's command to capture the screen of the moving image content; and
perceiving the image code according to a user's command to perceive the image code from the captured screen.

7. The display method of any of claims 1 to 5, wherein the perceiving the image code comprises:
automatically scanning the moving image content and perceiving the image code inserted in the moving image content in real-time basis; and
displaying a decoding-inducing on-screen display (OSD) to select the perceived image code in real-time basis.

8. The display method of any of claims 1 to 7, wherein the information contained in the image code comprises at least one of: OSD information related to the moving image content to be displayed on the OSD, and jumping information to move the screen of the moving image content including the image code to a site corresponding to the information contained in the image code selected by a user.

9. The display method of claim 8, wherein the displaying the information contained in the image code comprises displaying the OSD information on the OSD.

10. The display method of claim 8 or claim 9, further comprising moving the screen of the moving image content including the image code to a site corresponding to the selected information according to the jumping information.

11. The display method of any of claims 1 to 10, wherein the displaying the information contained in the image code comprises:
displaying an execution menu regarding the information contained in the image code; and
executing a function of the execution menu selected by a user.

12. The display method of claim 11, wherein the executing the function of the execution menu selected by the user comprises executing the function, using a web browser or an application manager according to a type of the information contained in the image code.

13. A display apparatus using an image code, the display apparatus comprising:
an image code perceiving unit which perceives the image code inserted in image forms in moving image information of a moving image content;
an image code decoding unit which analyzes the information included in the image code related to the moving image content by decoding the image code; and
a display unit which displays the information contained in the image code.

14. The display apparatus of claim 13, wherein the image code decoding unit trans-codes the moving image content including the image code into another format.

15. The display apparatus of claim 14, further comprising an uploading unit which uploads the trans-coded moving image content on to the internet.
